# FASCICULE DE BREVET EUROPEEN

(11) **EP 3 871 078 B1**
(45) Date de publication et mention de la délivrance du brevet: **16.10.2024**
(21) Numéro de dépôt: 19868212.2
(22) Date de dépôt: 05.12.2019
(51) Int. Cl.: G06F 8/60, G05B 23/02, G06N 20/00

(54) **SYSTÈME D'ENVIRONNEMENT INFORMATIQUE POUR LA SURVEILLANCE DE MOTEURS D'AÉRONEFS**
COMPUTING-SYSTEM ZUR ÜBERWACHUNG VON FLUGTRIEBWERKEN
COMPUTING SYSTEM FOR MONITORING AIRCRAFT ENGINES

(30) Priorité: 07.12.2018 FR 1872520
(43) Date de publication de la demande: 01.09.2021
(73) Titulaire: SAFRAN AIRCRAFT ENGINES, 75015 Paris (FR)
(72) Inventeur: LACAILLE, Jérôme Henri Noël, 77550 Moissy-Cramayel (FR); FOREST, Florent Evariste, 77550 Moissy-Cramayel (FR)
(74) Mandataire: Brevalex
(86) Numéro de dépôt international: PCT/FR2019/052935
(87) Numéro de publication internationale: WO 2020/115440

(56) Documents cités:
- FR-A1- 2 971 595
- FR-A1- 3 052 273
- US-A1- 2018 101 583
- US-B1- 9 686 086
- SRINI PENCHIKALA: "Big Data Processing with Apache Spark - Part 5: Spark ML Data Pipelines", INFOQ HOMEPAGE > ARTICLES, 24 September 2016 (2016-09-24), pages 1 - 21, XP055647089, Retrieved from the Internet <URL:https://www.infoq.com/articles/apache-sparkml-data-pipelines/> [retrieved on 20191127]
- SRINI PENCHIKALA: "Snapshot - first page of the article "Big Data Processing with Apache Spark - Part 5: Spark ML Data Pipelines"", INFOQ HOMEPAGE > ARTICLES, 27 November 2019 (2019-11-27), pages 1 - 1, XP055647112, Retrieved from the Internet <URL:https://www.infoq.com/articles/apache-sparkml-data-pipelines/> [retrieved on 20191127]
- CHANDRAMOHAN ANANDAVEL MURUGAN ET AL: "Big Data Infrastructure for Aviation Data Analytics", 2014 IEEE INTERNATIONAL CONFERENCE ON CLOUD COMPUTING IN EMERGING MARKETS (CCEM), IEEE, 15 October 2014 (2014-10-15), pages 1 - 6, XP032726702, DOI: 10.1109/CCEM.2014.7015483
- FOREST FLORENT ET AL: "A Generic and Scalable Pipeline for Large-Scale Analytics of Continuous Aircraft Engine Data", 2018 IEEE INTERNATIONAL CONFERENCE ON BIG DATA (BIG DATA), IEEE, 10 December 2018 (2018-12-10), pages 1918 - 1924, XP033508269, DOI: 10.1109/BIGDATA.2018.8622297

## Description

### DOMAINE DE L'INVENTION

La présente invention se rapporte au domaine de surveillance de moteurs d'aéronefs. En particulier, l'invention concerne un système d'environnement informatique pour la surveillance de moteurs d'aéronefs.

Les ingénieurs aéronautiques spécialisés dans chacun des domaines de fonctionnement des moteurs développent des algorithmes pour la surveillance de ces derniers quand ils sont en opération. Ces algorithmes utilisent des connaissances précises sur le fonctionnement des moteurs et permettent de prédire des événements avant qu'une panne ne survienne. Ce processus s'appelle le « pronostic et health-monitoring ».

En effet, durant chaque vol, un aéronef procède à l'enregistrement de données de vol, de contexte et de fonctionnement issues des capteurs et calculateurs associés aux moteurs et à d'autres systèmes de l'aéronef. Ces données fournissent des informations importantes quant au bon déroulement du vol et qui peuvent être utilisées pour détecter une éventuelle anomalie.

Cependant, la flotte des moteurs devant être suivie est désormais trop importante pour une analyse spécifique par chaque opérateur. Les données de vol issues des différents aéronefs sont ainsi systématiquement téléchargées et stockées sur un support informatique distribué (par exemple, de type Hadoop) où les codes de surveillance peuvent être exécutés en parallèle de manière systématique.

Toutefois, l'exécution en parallèle de codes informatiques nécessite des compétences particulières en programmation distribuée et une bonne connaissance du fonctionnement des clusters de calcul. Or, les ingénieurs des moteurs d'aéronefs sont en général des spécialistes en thermodynamique et en mécanique et n'ont pas ce genre de compétences qui sont du ressort des spécialistes de la programmation informatique distribuée.

Il existe des plateformes génériques telles que Datalku qui peuvent aider au développement de nouveaux codes. Toutefois, ce genre d'outils n'est pas spécialisé dans les traitements de surveillance de moteurs d'aéronefs et n'est pas capable de produire des solutions opérationnelles et ce sont des outils de développement et non pas des plateformes applicatives.

Le brevet US 9 686 086 B1 concerne le traitement de grandes quantités de données stockées au sein de structures de données distribuées par les processeurs d'un système parallèle.

L'objet de la présente invention est, par conséquent, un procédé et un système de surveillance permettant à des ingénieurs sans aucune connaissance d'informatique distribuée de continuer à mettre au point leurs codes avec des langages qu'ils maitrisent sur de petits jeux de données pour ensuite les déployer de manière opérationnelle sur l'ensemble des moteurs et des vols.

### OBJET ET RÉSUME DE L'INVENTION

L'invention est spécifiée par les revendications indépendantes annexées. En outre, des modes de réalisation préférés sont définis par les revendications dépendantes.

La présente invention concerne un système d'environnement informatique pour la surveillance de moteurs d'aéronefs, ledit système étant connecté à un cluster de serveurs, ledit système comportant:
- une interface applicative configurée pour recevoir des codes utilisateurs développés indépendamment du système de déploiement distribué spécifiant le calcul d'un ensemble d'indicateurs relatifs à un moteur d'aéronef pour un déploiement sur une flotte de moteurs d'aéronefs,
- un module d'extraction configuré pour extraire lesdits indicateurs en déployant des calculs en parallèle sur des données de vol temporelles issues de la flotte de moteurs d'aéronefs et stockées dans une base de données distribuée sur ledit cluster de serveurs,
- un module d'apprentissage configuré pour utiliser lesdits indicateurs pour construire de manière non supervisée à partir desdits indicateurs un modèle de surveillance représentatif des indicateurs en mettant en oeuvre des fonctions d'apprentissage prédéterminées.

Ce système permet à des ingénieurs de mettre en oeuvre et d'utiliser leurs propres algorithmes d'extraction d'indicateurs sans aucune connaissance de l'architecture du cluster de serveurs ni de calculs distribués. Le système permet ainsi de traiter en parallèle et de manière évolutive un très grand nombre de données de vols et de moteurs tout en utilisant des fonctions génériques et des algorithmes déjà existants pour calculer les indicateurs et construire un modèle de représentation permettant d'identifier des tendances ou de classer les moteurs pour déterminer lesquels sont à maintenir en priorité. Ainsi, on peut suivre une flotte de moteurs d'aéronefs afin de pronostiquer et de planifier les opérations de maintenance avec une grande précision.

Avantageusement, le module d'extraction comporte un mécanisme de séquencement configuré pour mettre en oeuvre d'éventuelles récurrences dans l'extraction des indicateurs spécifiques à chaque vol et à chaque moteur. Ceci permet de réutiliser les indicateurs déjà extraits pour calculer de nouveaux indicateurs de manière récurrente.

Selon la présente invention, lesdits indicateurs comportent des indicateurs de santé et des indicateurs de contexte correspondants. Avantageusement, le module d'extraction est configuré pour normaliser lesdits indicateurs de santé en fonction des indicateurs de contexte correspondants en mettant en oeuvre des techniques de régression. Les indicateurs de santé sont rendus indépendants du contexte permettant ainsi non seulement de suivre l'évolution de chaque moteur mais aussi de les comparer entre eux.

Avantageusement, le système d'environnement informatique comporte un module de visualisation comprenant des outils graphiques configurés pour représenter le modèle de surveillance selon des représentations statistiques. Ceci permet d'analyser les résultats et de comparer des moteurs ou des flottes ou d'observer des tendances individuelles ou des tendances moyennes sur une flotte ou de catégoriser les différents moteurs suivis.

Avantageusement, les codes utilisateurs comportent des spécifications des données d'entrées à traiter en parallèle et des données de sortie comprenant des indicateurs de contexte et de santé, lesdits codes utilisateurs étant décrits dans un langage quelconque choisi parmi des langages parallèles du type Spark ainsi que des langages métiers du type Scala, Python, ou R.

Avantageusement, les données de vol temporelles sont des données opérationnelles continues du moteur issues des capteurs et calculateurs associés aux moteurs d'aéronefs ainsi que des données continues issues des aéronefs, lesdites données de vol temporelles étant stockées dans un système de fichiers distribués sur ledit cluster de serveurs. Ceci permet de stocker et de traiter un très grand volume de données de vol.

Avantageusement, le système d'environnement informatique comporte un premier module de prétraitement configuré pour former des vecteurs temporels en agrégeant lesdites données temporelles vol par vol. Ceci permet de réduire le nombre de lignes et par conséquent, d'accélérer le traitement des données.

Avantageusement, les indicateurs extraits par le module d'extraction sont stockés dans une structure de données déployée sur le cluster de serveurs. Ceci facilite le traitement des indicateurs utilisés pour la construction du modèle de représentation tout en permettant de les visualiser et de les réutiliser pour calculer des nouveaux indicateurs.

Avantageusement, le système d'environnement informatique comporte un deuxième module de prétraitement configuré pour transformer le format vectoriel des indicateurs en un format matriciel adapté pour l'application des fonctions d'apprentissage.

Avantageusement, les fonctions d'apprentissage prédéterminées comportent des algorithmes d'apprentissage parmi les algorithmes suivants : des algorithmes de cartographie auto-adaptative de Kohonen, des algorithmes de détection d'anomalie, des algorithmes de détection et suivi de tendances, des algorithmes d'analyse de fonctionnement d'un équipement ou d'un système spécifique des moteurs d'aéronef, et des algorithmes d'anticipation d'évènement ou de pronostic.

L'invention vise également un procédé de surveillance de moteurs d'aéronefs comportant les étapes suivantes:
- recevoir des codes utilisateurs spécifiant le calcul d'un ensemble d'indicateurs relatifs à un moteur d'aéronef pour un déploiement sur une flotte de moteurs d'aéronefs,
- extraire lesdits indicateurs en déployant des calculs en parallèle sur des données de vol temporelles issues de la flotte de moteurs d'aéronefs et stockées dans une base de données distribuée sur un cluster de serveurs,
- utiliser lesdits indicateurs pour construire de manière non supervisée à partir desdits indicateurs un modèle de surveillance représentatif des indicateurs en mettant en oeuvre des fonctions d'apprentissage prédéterminées.

L'invention vise aussi un programme d'ordinateur comportant des instructions de code pour la mise en oeuvre du procédé de surveillance ci-dessus lorsqu'il est exécuté sur le système d'environnement informatique selon l'une quelconque des caractéristiques ci-dessus.

### BRÈVE DESCRIPTION DES DESSINS

D'autres particularités et avantages du dispositif et du procédé selon l'invention ressortiront mieux à la lecture de la description faite ci-après, à titre indicatif mais non limitatif, en référence aux dessins annexés sur lesquels :
[Fig. 1] illustre de manière schématique un système d'environnement informatique pour la surveillance de moteurs d'aéronefs, selon un mode de réalisation de l'invention ;
[Fig. 2] illustre de manière schématique un système d'environnement informatique, selon un mode de réalisation préféré de l'invention ; et
[Fig. 3] illustre de manière schématique un système d'interface et d'extraction des indicateurs selon le mode de réalisation de la Fig. 2.

### DESCRIPTION DÉTAILLÉE DE MODES DE RÉALISATION

Le principe de l'invention consiste à proposer un environnement informatique qui va encapsuler les codes métiers développés par des ingénieurs pour les faire fonctionner de manière distribuée sur une multitude de serveurs.

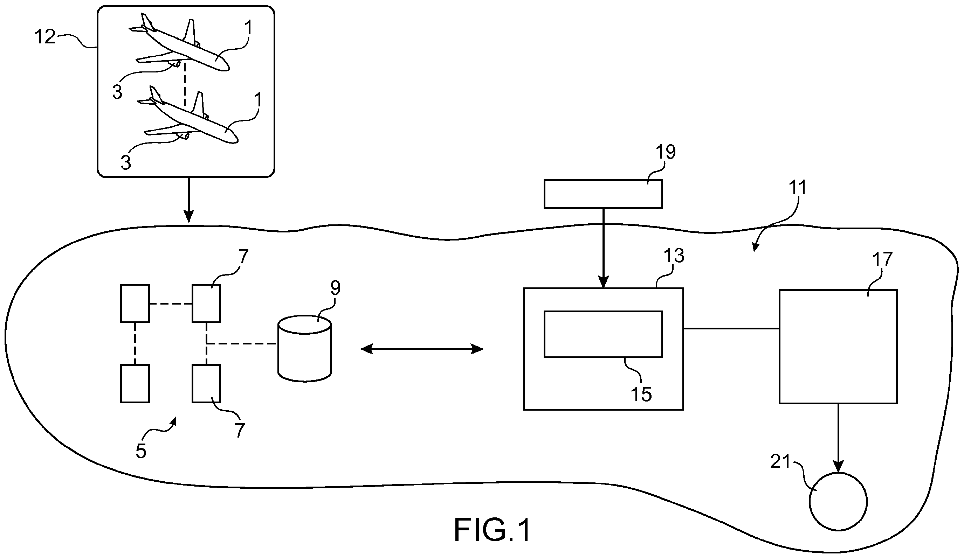

La Fig. 1 illustre de manière schématique un système d'environnement informatique pour la surveillance de moteurs d'aéronefs, selon un mode de réalisation de l'invention.

Actuellement, on dispose d'un très large volume de données temporelles brutes acquises en continu par les différents moteurs et aéronefs. En effet, au cours de chaque vol, chaque aéronef 1 procède à l'enregistrement d'informations sur son fonctionnement ainsi que sur différents paramètres environnementaux. Ces données enregistrées par des calculateurs embarqués (par exemple, FADEC, ACMS) sur des supports et des formats divers (DAR, QAR, CEOD, etc.) sont issues des mesures fournies par des sondes ou capteurs intégrés dans les moteurs 3 d'aéronefs ainsi que dans d'autres systèmes de l'aéronef 1. Par exemple, le FADEC (qui contrôle le moteur) enregistre les données mesurées par des capteurs intégrés au moteur 3 permettant à la fois de contrôler le moteur 3 et de servir de base à une procédure de surveillance et de maintenance prédictive. Plus particulièrement, à chaque acquisition, les données comprennent un premier ensemble de données sur des variables endogènes décrivant le comportement du moteur 3 ainsi que d'autres entités de l'aéronef 1 et un second ensemble de données sur des variables exogènes décrivant le contexte d'acquisition.

A titre d'exemple, les variables endogènes peuvent comprendre la vitesse de rotation N2 de l'arbre du coeur du moteur 3, le débit du carburant, les températures et pressions de fluides en différentes localisations du moteur (par exemple, avant et/ou après compression), la température des gaz d'échappement EGT (Exhaust Gas Température), etc.

Les variables exogènes peuvent comprendre les variables suivantes : température extérieure, altitude, poids de l'aéronef, dégivrage des ailes, dégivrage de la nacelle, prélèvement d'air, géométries variables, vanne de décharge VBV (variable bleed valve), stator à géométrie variable VSV (variable stator vannes), décharge des turbines basse pression et haute pression (LPTACC et HPTACC - Low/High Pressure Turbine Active Clearance Control), ouverture compresseur HP, prélèvement d'air ECS (environnemental control system, l'air conditionné), vitesse de rotation demandée du fan N1 (correspondant à la poussée souhaité du moteur), angle de manette de commande de poussée TLA (Thrust Lever Angle), vitesse de l'aéronef (Mach number), etc. Les variables endogènes (descriptives du comportement d'un système) et exogènes (descriptives du contexte d'acquisition) peuvent être choisies par l'utilisateur en fonction du système surveillé par l'indicateur calculé.

Toutes ces données temporelles endogènes et exogènes sont enregistrées en continu sur le calculateur du moteur ou sur un calculateur central de l'aéronef 1. Ensuite, ces données temporelles sont systématiquement téléchargées et stockées dans des moyens de stockage au sol pour constituer une base de données sur toute la flotte de moteurs 3 et sur tous les vols.

Afin de traiter ce très large volume de données, on utilise un système de stockage distribué, par exemple de type Hadoop, qui permet de capitaliser toutes les données de vol temporelles d'une flotte de moteurs d'aéronefs en réalisant un traitement de données en parallèle sur un ensemble 5 (dit « grappe » ou « cluster ») de serveurs 7.

Ainsi, un large volume de données temporelles brutes acquises par les différents moteurs 3 et aéronefs 1 est stocké dans une base de données 9 distribuée sur les différents serveurs 7. Par exemple, ces données de vol sont stockées de manière systématique sur un système de fichiers distribués du cluster 5 de serveurs 7. Comme ces données arrivent au fil de l'eau une procédure de stockage optimisant l'acquisition est avantageusement mise en place. Cette procédure représente les données de manière très redondante, mais de façon très générique en leur associant par exemple les valeurs suivantes : le temps, le numéro de série du moteur, et le paramètre mesuré ou calculé par le calculateur de bord. Afin de rendre cette représentation adaptée à un traitement analytique, on la transforme en une structure vectorielle. Cette procédure génère des tables distribuées sur les serveurs 7 mais où chaque paramètre est représenté par un vecteur temporel (i.e. une courbe) pour chaque vol.

Afin d'exploiter et de faire tourner des algorithmes de surveillance de moteurs 3 d'aéronefs déjà existants sur ce grand volume de données, la présente invention propose d'utiliser une plateforme de distribution d'algorithmes. Cette plateforme, dite système 11 d'environnement informatique, est connectée à un système de déploiement distribué comportant un cluster 5 de serveurs 7, sur lequel sont stockées de manière distribuée les données de vol temporelles relatives à une flotte 12 de moteurs 3 d'aéronefs 1. Le cluster 5 de serveur 7 peut être regroupé en un ensemble de noeuds de calcul, chacun pouvant être constitué d'un grand nombre de serveurs 7 dont on peut adapter la taille en fonction du besoin.

Conformément à l'invention, le système 11 d'environnement informatique comporte une interface applicative 13, un module d'extraction 15, et un module d'apprentissage 17.

L'interface applicative 13 est configurée pour recevoir des codes utilisateurs 19 développés indépendamment du système de déploiement distribué spécifiant le calcul d'un ensemble d'indicateurs relatifs à un moteur d'aéronef. Ces codes utilisateurs 19 (qui peuvent être des codes métier du type Scala ou Python ou R mis en oeuvre par des ingénieurs qui n'ont aucune connaissance de calculs distribués) sont déployés pour les faire fonctionner de manière distribuée sur les données de toute la flotte 12 de moteurs 3 d'aéronefs 1.

En effet, le module d'extraction 15 est configuré pour extraire les indicateurs en déployant des calculs en parallèle dans le cluster 5 de serveurs sur les données de vol temporelles (plus particulièrement, les vecteurs de vol) issues de toute la flotte 12 de moteurs d'aéronefs stockées dans la base de données 9 distribuée sur le cluster 5 de serveurs 7.

En outre, le module d'apprentissage 17 est configuré pour utiliser les indicateurs extraits par le module d'extraction 15 afin de construire de manière non supervisée un modèle 21 de surveillance représentatif de ces indicateurs en mettant en oeuvre des fonctions d'apprentissage prédéterminées comme, par exemple, des fonctions de cartographie auto-adaptative de Kohonen pour construire le modèle de surveillance. Ce modèle de surveillance permet par exemple d'identifier des tendances ou de classer les moteurs.

Le système 11 d'environnement informatique permet d'ingérer les codes 19 spécifiques développés par des ingénieurs sans qu'ils aient à se soucier de la distribution des serveurs 7 et des données. Ainsi, un ingénieur aéronautique peut continuer à proposer des outils qu'il testera sur de petits jeux de données avant de les injecter dans le système 11 d'environnement informatique pour les distribuer sur l'ensemble des moteurs 3 et des vols. En outre, ce système 11 permet d'encapsuler les codes utilisateurs pour les faire fonctionner de manière distribuée sans que le spécialiste informatique n'ait besoin de les modifier.

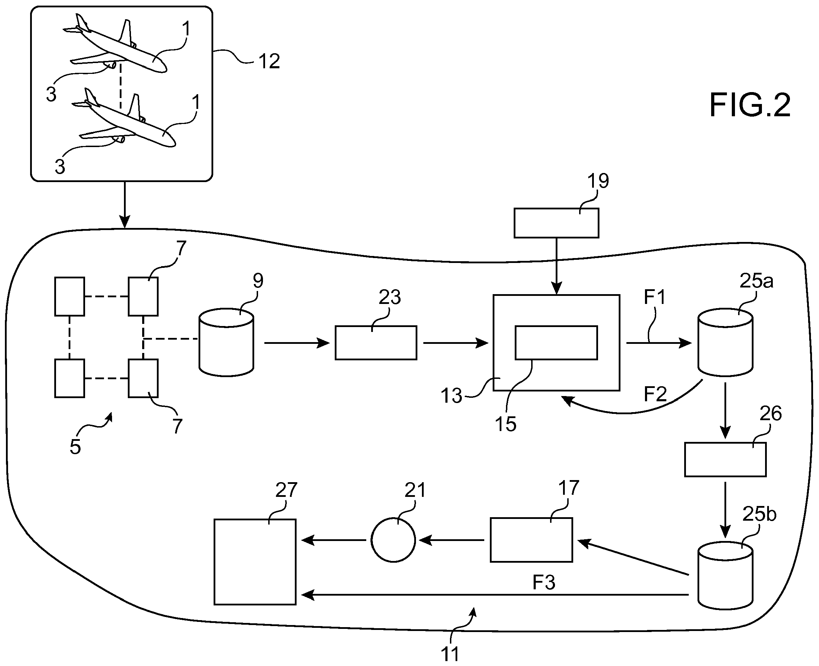

La Fig. 2 illustre de manière schématique un système d'environnement informatique, selon un mode de réalisation préféré de l'invention. Comme précédemment, le système 11 d'environnement informatique est connecté à un cluster 5 de serveurs 7 comprenant une base de données 9 distribuée sur laquelle sont stockées les données de vol temporelles d'une flotte 12 de moteurs 3 d'aéronefs 1. Selon ce mode de réalisation, le système 11 d'environnement informatique comporte un premier module de prétraitement 23, une interface applicative 13, un module d'extraction 15, des structures de stockage 25a, 25b de données, un deuxième module de prétraitement 26, un module d'apprentissage 17, et un module de visualisation 27.

La première étape dans la surveillance d'un moteur 3 d'aéronef est de déterminer un ensemble d'indicateurs représentatifs de l'état de santé du moteur 3 ou d'un sous-système du moteur (par exemple, niveau d'huile, consommation de carburant, système de contrôle, etc.). De tels indicateurs peuvent être aussi simples que la valeur d'un paramètre à un moment spécifique du vol, mais elles peuvent également être des fonctionnalités plus complexes conçues par des experts.

Le calcul des indicateurs peut être parallélisé sur les différents vols et donc traiter un vol à la fois. Il est également possible de traiter le calcul des indicateurs sur un groupe de vols à la fois (par exemple, tous les vols d'un moteur ou sur une fenêtre temporelle des N derniers vols d'un moteur, etc.).

On notera que les calculs effectués pour l'extraction des indicateurs devront traiter la série temporelle d'un paramètre de vol dans son ensemble. En effet, la plus petite entité à traiter en parallèle est un paramètre pendant tout un vol. Il n'est, par conséquent, pas nécessaire de disposer d'une ligne par « pas » de temps.

Ainsi, le premier module de prétraitement 23 est configuré pour prétraiter les séries temporelles de données de vol en les agrégeant sur la dimension temporelle pour former des vecteurs temporels. Ce prétraitement peut être réalisé en utilisant l'opération d'agrégation « *collect_list »* du langage Spark SQL. Ceci permet de diminuer considérablement le nombre de lignes de données (par exemple, d'environ 500 milliards de lignes à seulement 5 millions de lignes). Avantageusement, cette opération peut n'être exécutée qu'une seule fois sur les nouvelles données entrantes vol par vol.

L'interface applicative 13 est configurée pour recevoir les codes 19 utilisateurs comportant des spécifications des données d'entrées à traiter en parallèle et des données de sortie comprenant les indicateurs de contexte et de santé.

En outre, le module d'extraction 15 (représenté comme étant compris dans l'interface applicative 13) est configuré pour extraire les indicateurs en réalisant des calculs en parallèle sur les vecteurs temporels issus des données stockées dans la base de données 9 distribuée sur le cluster 5 de serveurs 7.

Les indicateurs représentant les différents vols par moteur extraits par le module d'extraction 15 sont stockés dans la structure de stockage 25a de données qui peut être aussi déployée sur le cluster 5 de serveurs 7.

Par ailleurs, le module d'extraction 15 comporte un mécanisme de séquencement configuré pour mettre en oeuvre d'éventuelles récurrences dans l'extraction des indicateurs spécifiques à chaque vol et à chaque moteur. Ce mécanisme est représenté par la boucle (flèches F1 et F2) entre le module d'extraction 15 et la structure de stockage 25a de données.

En effet, un indicateur peut être calculé en deux temps parce que c'est plus facile ou qu'un résultat intermédiaire est nécessaire. Il est possible aussi qu'un indicateur dépende de la valeur qu'il avait, ou que d'autres indicateurs avaient, lors de vols précédents.

On notera que les indicateurs extraits par le module d'extraction 15 comportent des indicateurs de santé et des indicateurs de contexte d'acquisition correspondants. Avantageusement, le module d'extraction 15 est configuré pour normaliser les indicateurs de santé en fonction des indicateurs de contexte correspondant. Cette normalisation est réalisée en utilisant des techniques de régression faisant intervenir des outils d'apprentissage exploitant des jeux de données spécifiques aux moteurs 3 et aéronefs 1.

Plus particulièrement, les indicateurs de santé peuvent être normalisés selon un modèle de régression sur un espace de variables de contexte généré par des combinaisons analytiques des indicateurs de contexte. Ce traitement qui consiste à utiliser un modèle de régression sur des variables de contexte additionnelles construites par exemple à partir de transformations polynomiales, exponentielles et logarithmiques ou autres des indicateurs de contexte initiaux permet de supprimer de manière efficace l'influence du contexte d'acquisition (c'est-à-dire les effets environnementaux et les consignes) sur les indicateurs de santé décrivant les états des moteurs 3.

Avantageusement, la normalisation peut être suivie par un filtrage et nettoyage de bruit sur les indicateurs de santé normalisés en utilisant un outil de lissage et un outil de détection de changements brusques. Ainsi, les indicateurs de santé sont rendus indépendants du contexte permettant, par conséquent, de les comparer entre eux sur des vols et des moteurs différents et donc entre autres de suivre l'évolution de chaque moteur 3.

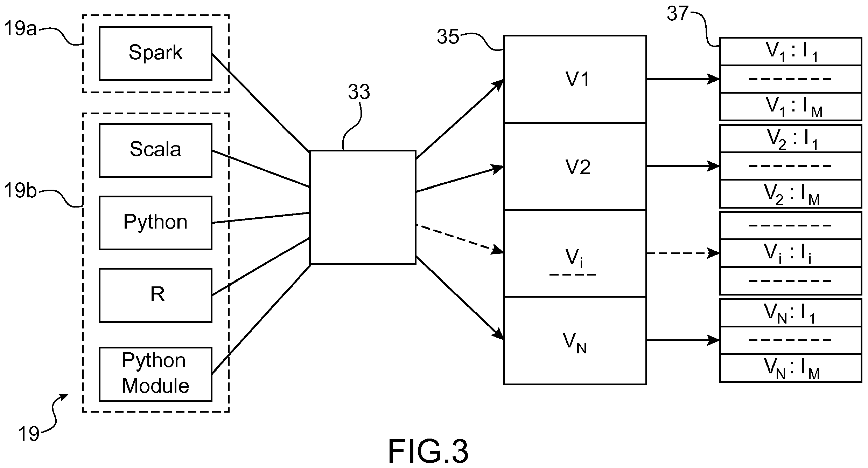

La Fig. 3 illustre de manière schématique un système d'interface et d'extraction des indicateurs selon le mode de réalisation de la Fig. 2. Ce système d'interface et d'extraction comporte une interface 33 de programmation applicative API représentant l'interface applicative 13 et le module d'extraction 15 de la Fig. 2. L'interface 33 de programmation applicative APl peut prendre en charge plusieurs types de codes 19 utilisateurs. Les codes 19 utilisateurs peuvent être décrits dans un langage parallèle 19a du type Spark. Le code Spark est un langage natif qui permet d'optimiser les performances du calcul distribué. En outre, les utilisateurs familiarisés avec la programmation en Spark peuvent écrire des fonctions Spark personnalisées.

Avantageusement, les codes 19 utilisateurs peuvent être développés dans des langages objets locaux 19b (i.e. non distribués) du type Scala, Python, ou R permettant d'exécuter des traitements analytiques. Des bibliothèques numériques d'analyse de données et d'apprentissage automatique peuvent être utilisées pour définir tout type d'algorithme avec ces langages métiers. L'interface de programmation applicative API peut également prendre en charge des codes mis sous la forme de modules du type Python module.

Toutefois, ces codes peuvent être appelés de manière simultanée sur plusieurs noeuds de calculs du cluster 5 de serveurs 7. Ainsi, l'interface 33 de programmation applicative est configurée pour encapsuler ces codes leur permettant de fonctionner de manière identique dans des domaines de données différents.

Plus particulièrement, l'interface 33 de programmation applicative APl est configurée pour automatiquement déployer les codes 19 utilisateurs sur l'ensemble des noeuds de calcul des serveurs 7 qui gèrent l'ensemble de données de vols de sorte que ces codes 19 utilisateurs vont s'exécuter de manière distribuée sur les différents serveurs 7. Les résultats 35 en sortie de l'interface 33 applicative sont distribués selon les différents groupes de vols référencés V₁,... V_{N}. Ensuite, ces résultats 35 sont mis en correspondance pour former des vecteurs d'indicateurs 37 pour chaque vol Vᵢ (V₁: I₁-I_{M} ; ... ; V_{N}: I₁-I_{M}).

L'interface 33 de programmation applicative permet ainsi d'extraire les indicateurs de manière distribuée et selon des données en parallèle, ce qui permet de traiter un grand nombre de vols et de moteurs 3 en parallèle. En outre, il permet l'utilisation des fonctions génériques et des algorithmes déjà existants pour calculer ces indicateurs. Ainsi, les ingénieurs sont capables de mettre en oeuvre et d'utiliser leurs propres algorithmes d'extraction d'indicateurs sans aucune connaissance de l'architecture de cluster 5 par exemple de type Hadoop ni de langage distribué de type Spark.

Par ailleurs, le deuxième module de prétraitement 26 du système d'environnement 11 informatique est configuré pour transformer le format vectoriel 37 des indicateurs I₁-I_{M} en un format matriciel standard adapté pour l'application des fonctions d'apprentissages. Les indicateurs en format matriciel sont stockés dans la structure de stockage 25b de données qui peut aussi être installée sur le cluster 5.

Le module d'apprentissage 17 récupère ensuite les indicateurs en format matriciel pour construire de manière non supervisée un modèle 21 de surveillance représentatif de ces indicateurs en utilisant des fonctions d'apprentissage prédéterminées.

Un modèle 21 de surveillance très représentatif est celui réalisé par l'algorithme de cartographie des états moteurs. Cet algorithme est décrit en détail dans la demande de brevet EP2676176 de la demanderesse. Selon cet algorithme, des indicateurs de santé et de contexte sont extraits pendant le décollage. Après normalisation des indicateurs de santé par le contexte d'acquisition, les indicateurs sont filtrés et classés sur une carte de Kohonen auto-adaptative (Self-Organizing Map). Cela permet de suivre la trajectoire d'un « état-performance » du moteur (appelé également « clone numérique » ou « digital twin »), d'étudier les tendances et de positionner les moteurs les uns par rapport aux autres pour mieux planifier les opérations de maintenance et de mieux cerner les dégradations et les pannes potentielles des moteurs permettant, par exemple, de savoir lesquels sont à maintenir en premier. Ainsi, cet algorithme permet de cartographier les données relatives aux états des moteurs indépendamment du contexte, de classer des moteurs selon des comportements analogues, et d'analyser statistiquement les événements intervenus sur les moteurs.

En plus des algorithmes de cartographie auto-adaptative de Kohonen, les fonctions d'apprentissage prédéterminées peuvent comporter de manière non exhaustive, des algorithmes de détection d'anomalie « scoring », des algorithmes de détection et suivi de tendances, des algorithmes d'analyse de fonctionnement des équipements ou systèmes spécifiques des moteurs d'aéronefs (par exemple analyse de la quantité d'huile ou de consommation de carburant, analyse de démarrage etc.), des algorithmes d'anticipation d'évènement ou de pronostic. Ces algorithmes sont décrits dans les brevets ou demandes de brevets de la demanderesse suivants : WO2017046530, EP2912526, EP3039497, EP3025205 et EP2817688.

On notera que ces algorithmes d'apprentissage exploitent en général une représentation en mémoire d'observations. Toutefois, le nombre de telles observations étant très grand dans un ensemble de serveurs de type cluster 5, ainsi, afin d'adapter ces algorithmes au système d'environnement 11 informatique, ces algorithmes sont réécrits de manière à ce que le codage exploite un mode parallèle ou itératif et non plus un traitement global. En particulier, les outils de régression avec réduction de dimension et de classification utilisés classiquement pour représenter l'état du moteur 3 sont transformés à l'échelle du volume de données distribuées.

Finalement, le module de visualisation 27 comprend des outils graphiques configurés pour représenter le modèle 21 de surveillance selon des représentations statistiques. Le module de visualisation 27 permet un affichage sur un écran déporté de l'utilisateur.

En outre, comme indiqué par la flèche F3, les indicateurs de santé peuvent également être directement représentés par le module de visualisation 27.

La visualisation du modèle et/ou des indicateurs de santé permet d'analyser les résultats et de comparer des moteurs ou des flottes par exemple par des diagrammes statistiques. On peut également utiliser des courbes pour observer les tendances individuelles ou les tendances moyennes sur une flotte 12. On peut également catégoriser par une liste de classes ou une carte les différents moteurs suivis.

Le système d'environnement 11 informatique se charge ainsi d'offrir une interface permettant d'enregistrer les différents codes, de programmer le séquencement et les sélections de données pour les apprentissages et de choisir les modes de visualisation des résultats. Ainsi, un utilisateur peut comparer ses propres résultats avec ceux beaucoup plus précis issus du système d'environnement informatique selon l'invention.

L'invention vise aussi un programme d'ordinateur, comportant des instructions de code adaptées à la mise en oeuvre d'une surveillance de moteurs d'aéronefs selon les modes de réalisations de l'invention tels que décrits ci-dessus.

## Revendications

1. Système d'environnement informatique pour la surveillance de moteurs d'aéronefs, ledit système étant connecté à un cluster de serveurs, **caractérisé en ce que** ledit système comporte:
- une interface applicative (13) configurée pour recevoir des codes (19) utilisateurs déployés dans le cluster de serveurs pour les faire fonctionner de manière distribuée sur des données temporelles d'une flotte (12) de moteurs (3) d'aéronefs et comportant des spécifications de données d'entrées à traiter en parallèle et des données de sortie comprenant les indicateurs de contexte et de santé, lesdits codes (19) utilisateurs spécifiant le calcul d'un ensemble d'indicateurs représentatifs de l'état de santé d'un moteur d'aéronef (3) pour un déploiement sur une flotte (12) de moteurs d'aéronefs,
- un module d'extraction (15) configuré pour extraire lesdits indicateurs en déployant des calculs en parallèle dans le cluster de serveurs sur des données de vol temporelles issues de la flotte de moteurs d'aéronefs et stockées dans une base de données (9) distribuée sur ledit cluster (5) de serveurs (7),
- un module d'apprentissage (17) configuré pour utiliser lesdits indicateurs extraits par le module d'extraction pour construire de manière non supervisée à partir desdits indicateurs un modèle (21) de surveillance représentatif des indicateurs en mettant en oeuvre des fonctions d'apprentissage prédéterminées, ledit modèle de surveillance étant adapté pour identifier des tendances ou de classer les moteurs d'aéronefs pour déterminer lesquels sont à maintenir en priorité.

2. Système selon la revendication 1, **caractérisé en ce que** le module d'extraction (15) comporte un mécanisme de séquencement configuré pour mettre en oeuvre d'éventuelles récurrences dans l'extraction des indicateurs.

3. Système selon la revendication 1 ou 2, **caractérisé en ce que** lesdits indicateurs comportent des indicateurs de santé et des indicateurs de contexte correspondants et **en ce que** le module d'extraction (15) est configuré pour normaliser lesdits indicateurs de santé en fonction des indicateurs de contexte correspondants en mettant en oeuvre des techniques de régression.

4. Système selon l'une quelconque des revendications précédentes, **caractérisé en ce qu'**il comporte un module de visualisation (27) comprenant des outils graphiques configurés pour représenter le modèle de surveillance selon des représentations statistiques.

5. Système selon l'une quelconque des revendications précédentes, **caractérisé en ce que** les codes (9) utilisateurs comportent des spécifications des données d'entrées à traiter en parallèle et des données de sortie comprenant des indicateurs de contexte et de santé, lesdits codes utilisateurs étant décrits dans un langage quelconque choisi parmi des langages parallèles du type Spark ainsi que des langages métiers du type Scala, Python, ou R.

6. Système selon l'une quelconque des revendications précédentes, **caractérisé en ce que** les données de vol temporelles sont des données opérationnelles continues du moteur issues des capteurs et calculateurs associés aux moteurs d'aéronefs ainsi que des données continues issues des aéronefs, lesdites données de vol temporelles étant stockées dans un système de fichiers distribués sur ledit cluster (5) de serveurs.

7. Système selon l'une quelconque des revendications précédentes, **caractérisé en ce qu'**il comporte un premier module de prétraitement (23) configuré pour former des vecteurs temporels en agrégeant lesdites données temporelles de vol.

8. Système selon l'une quelconque des revendications précédentes, **caractérisé en ce que** les indicateurs extraits par le module d'extraction (15) sont stockés dans une structure (25a, 25b) de données déployée sur le cluster (5) de serveurs.

9. Système selon l'une quelconque des revendications précédentes, **caractérisé en ce qu'**il comporte un deuxième module de prétraitement (27) configuré pour transformer le format vectoriel des indicateurs en un format matriciel adapté pour l'application des fonctions d'apprentissage.

10. Système selon l'une quelconque des revendications précédentes, **caractérisé en ce que** les fonctions d'apprentissage prédéterminées comportent des algorithmes d'apprentissage parmi les algorithmes suivants : des algorithmes de cartographie auto-adaptative de Kohonen, des algorithmes de détection d'anomalie, des algorithmes de détection et suivi de tendances, des algorithmes d'analyse de fonctionnement d'un équipement ou d'un système spécifique des moteurs d'aéronef, des algorithmes d'anticipation d'évènement ou de pronostic.

11. Procédé de surveillance de moteurs d'aéronefs, **caractérisé en ce qu'**il comporte les étapes suivantes:
- recevoir des codes (9) utilisateurs déployés dans un cluster de serveurs pour les faire fonctionner de manière distribuée sur des données temporelles d'une flotte (12) de moteurs (3) d'aéronefs et comportant des spécifications de données d'entrées à traiter en parallèle et des données de sortie comprenant les indicateurs de contexte et de santé, lesdits codes (19) utilisateurs spécifiant le calcul d'un ensemble d'indicateurs représentatifs de l'état de santé d'un moteur d'aéronef pour un déploiement sur une flotte de moteurs d'aéronefs,
- extraire lesdits indicateurs en déployant des calculs en parallèle dans le cluster de serveurs sur des données de vol temporelles issues de la flotte de moteurs d'aéronefs et stockées dans une base de données distribuée sur un cluster de serveurs,
- utiliser lesdits indicateurs extraits par le module d'extraction pour construire de manière non supervisée à partir desdits indicateurs un modèle (21) de surveillance représentatif des indicateurs en mettant en oeuvre des fonctions d'apprentissage prédéterminées, ledit modèle de surveillance étant adapté pour identifier des tendances ou de classer les moteurs d'aéronefs pour déterminer lesquels sont à maintenir en priorité.

12. Programme d'ordinateur comportant des instructions de code pour la mise en oeuvre du procédé de surveillance selon la revendication 11 lorsqu'il est exécuté sur le système d'environnement informatique selon l'une quelconque des revendications 1 à 10.

## Patentansprüche

1. Rechnerumgebungssystem zur Überwachung von Flugtriebwerken, wobei das System mit einem Server-Cluster verbunden ist, **dadurch gekennzeichnet, dass** das System aufweist:
- eine Anwendungsschnittstelle (13), die konfiguriert ist, um Benutzercodes (19) zu empfangen, die in dem Server-Cluster implementiert werden, damit sie verteilt auf temporäre Daten einer Flotte (12) von Flugtriebwerken (3) einwirken und Spezifikationen von Eingangsdaten aufweisen, die parallel zu verarbeiten sind, und Ausgangsdaten, die Kontext- und Gesundheitsdaten umfassen, wobei die Benutzercodes (19) die Berechnung einer Gruppe von Indikatoren spezifizieren, die für den Gesundheitszustand eines Flugtriebwerks (3) für die Implementierung in einer Flotte (12) von Flugtriebwerken repräsentativ sind,
- ein Extraktionsmodul (15), das konfiguriert ist, um die Indikatoren durch Implementierung paralleler Berechnungen im Server-Cluster auf zeitliche Flugdaten zu extrahieren, die von der Flugtriebwerkflotte stammen und in einer Datenbank (9) gespeichert sind, die auf dem Cluster (5) von Servern (7) verteilt ist,
- ein Lernmodul (17), das konfiguriert ist, um die Indikatoren zu verwenden, die von dem Extraktionsmodul extrahiert wurden, um auf nicht überwachte Weise ausgehend von den Indikatoren ein Überwachungsmodell (21) zu erstellen, das für die Indikatoren repräsentativ ist, indem es vorbestimmte Lernfunktionen umsetzt, wobei das Überwachungsmodell geeignet ist, Trends zu identifizieren oder Flugtriebwerke zu klassifizieren, um zu bestimmen, welche vorrangig zu warten sind.

2. System nach Anspruch 1, **dadurch gekennzeichnet, dass** das Extraktionsmodul (15) einen Sequenzierungsmechanismus aufweist, der konfiguriert ist, um mögliche Rekursionen bei der Extraktion der Indikatoren umzusetzen.

3. System nach Anspruch 1 oder 2, **dadurch gekennzeichnet, dass** die Indikatoren Gesundheitsindikatoren und entsprechende Kontextindikatoren aufweisen und dass das Extraktionsmodul (15) konfiguriert ist, um die Gesundheitsindikatoren in Abhängigkeit von den entsprechenden Kontextindikatoren durch die Umsetzung von Regressionstechniken zu standardisieren.

4. System nach einem der vorhergehenden Ansprüche, **dadurch gekennzeichnet, dass** es ein Visualisierungsmodul (27) aufweist, das grafische Werkzeugen aufweist, die konfiguriert sind, um das Überwachungsmodell gemäß statistischen Darstellungen darzustellen.

5. System nach einem der vorhergehenden Ansprüche, **dadurch gekennzeichnet, dass** die Benutzercodes (9) Spezifikationen der parallel zu verarbeitenden Eingangsdaten und der Ausgangsdaten aufweisen, die Kontext- und Gesundheitsindikatoren umfassen, wobei die Benutzercodes in einer beliebigen Sprache beschrieben sind, die aus parallelen Sprachen vom Typ Spark sowie aus Fachsprachen vom Typ Scala, Python oder R ausgewählt wird.

6. System nach einem der vorhergehenden Ansprüche, **dadurch gekennzeichnet, dass** die zeitlichen Flugdaten kontinuierliche Betriebsdaten des Triebwerks sind, die von Sensoren und Rechnern stammen, die den Flugtriebwerken zugeordnet sind, sowie kontinuierliche Daten, die von Flugzeugen stammen, wobei die zeitlichen Flugdaten in einem System von Dateien gespeichert sind, die auf dem Server-Cluster (5) verteilt sein.

7. System nach einem der vorhergehenden Ansprüche, **dadurch gekennzeichnet, dass** es ein erstes Vorverarbeitungsmodul (23) aufweist, das konfiguriert ist, um durch Aggregation der zeitlichen Flugdaten Zeitvektoren zu bilden.

8. System nach einem der vorhergehenden Ansprüche, **dadurch gekennzeichnet, dass** die vom Extraktionsmodul (15) extrahierten Indikatoren in einer Datenstruktur (25a, 25b) gespeichert werden, die auf dem Server-Cluster (5) implementiert ist.

9. System nach einem der vorhergehenden Ansprüche, **dadurch gekennzeichnet, dass** es ein zweites Vorverarbeitungsmodul (27) umfasst, das konfiguriert ist, um das Vektorformat der Indikatoren in ein Matrixformat umzuwandeln, das für die Anwendung der Lernfunktionen geeignet ist.

10. System nach einem der vorhergehenden Ansprüche, **dadurch gekennzeichnet, dass** die vorbestimmten Lernfunktionen Lernalgorithmen von den folgenden Algorithmen aufweisen: Algorithmen zur selbstanpassenden Kohonen-Kartierung, Algorithmen zur Erkennung von Anomalien, Algorithmen zur Erkennung und Verfolgung von Trends, Algorithmen zur Analyse der Funktionsweise einer Ausrüstung oder eines spezifischen Systems von Flugtriebwerken, Algorithmen zur Vorwegnahme von Ereignissen oder Prognosen.

11. Verfahren zur Überwachung von Flugtriebwerken, **dadurch gekennzeichnet, dass** es die folgenden Schritte umfasst:
- Empfangen von Benutzercodes (9), die in einem Server-Cluster implementiert sind, damit sie verteilt auf temporäre Daten einer Flotte (12) von Flugtriebwerken (3) einwirken und Spezifikationen von Eingangsdaten aufweisen, die parallel zu verarbeiten sind, und Ausgangsdaten, die Kontext- und Gesundheitsdaten umfassen, wobei die Benutzercodes (19) die Berechnung einer Gruppe von Indikatoren spezifizieren, die für den Gesundheitszustand eines Flugtriebwerks (3) für die Implementierung in einer Flotte (12) von Flugtriebwerken repräsentativ sind,
- Extrahieren der Indikatoren durch Implementierung paralleler Berechnungen im Server-Cluster auf zeitliche Flugdaten, die von der Flugtriebwerkflotte stammen und in einer Datenbank gespeichert sind, die auf einem Server-Cluster verteilt ist,
- Verwenden der von dem Extraktionsmodul extrahierten Indikatoren, um auf nicht überwachte Weise ausgehend von den Indikatoren ein Überwachungsmodell (21) zu erstellen, das für die Indikatoren repräsentativ ist, indem es vorbestimmte Lernfunktionen umsetzt, wobei das Überwachungsmodell geeignet ist, Trends zu identifizieren oder Flugtriebwerke zu klassifizieren, um zu bestimmen, welche vorrangig zu warten sind.

12. Rechnerprogramm, das mit Codeanweisungen für die Durchführung des Überwachungsverfahrens nach Anspruch 11 aufweist, wenn es auf dem Rechnerumgebungssystem nach einem der Ansprüche 1 bis 10 ausgeführt wird.

## Claims

1. A computing environment system for monitoring aircraft engines, said system being connected to a cluster of servers, **characterised in that** said system includes:
- an application interface (13) configured to receive user codes (19) deployed in the cluster of servers for distributed operation on time data of a fleet (12) of aircraft engines (3) and including specifications of input data to be processed in parallel and output data comprising context and health indicators, said user codes (19) specifying calculation of a set of indicators representative of the state of health of an aircraft engine (3) for deployment on a fleet (12) of aircraft engines,
- an extraction module (15) configured to extract said indicators by deploying calculations in parallel in the cluster of servers on time flight data from the fleet of aircraft engines and stored in a database (9) distributed on said cluster (5) of servers (7),
- a learning module (17) configured to use said indicators extracted by the extraction module to build in an unsupervised manner from said indicators a monitoring model (21) representative of the indicators by implementing predetermined learning functions, said monitoring model being adapted to identify trends or to classify aircraft engines to determine which are to be maintained as a priority.

2. The system according to claim 1, **characterised in that** the extraction module (15) includes a sequencing mechanism configured to implement possible recurrences in extracting the indicators.

3. The system according to claim 1 or 2, **characterised in that** said indicators include health indicators and corresponding context indicators and **in that** the extraction module (15) is configured to normalise said health indicators as a function of the corresponding context indicators by implementing regression techniques.

4. The system according to any of the preceding claims, **characterised in that** it includes a viewing module (27) comprising graphical tools configured to represent the monitoring model as statistical representations.

5. The system according to any of the preceding claims, **characterised in that** the user codes (9) include specifications of the input data to be processed in parallel and of the output data comprising context and health indicators, said user codes being described in any language chosen from among parallel languages of the Spark type as well as business-oriented languages of the Scala, Python or R type.

6. The system according to any of the preceding claims, **characterised in that** the time flight data are continuous engine operational data from sensors and calculators associated with aircraft engines as well as continuous data from aircraft, said time flight data being stored in a distributed file system on said cluster (5) of servers.

7. The system according to any of the preceding claims, **characterised in that** it includes a first preprocessing module (23) configured to form time vectors by aggregating said time flight data.

8. The system according to any of the preceding claims, **characterised in that** the indicators extracted by the extraction module (15) are stored in a data structure (25a, 25b) deployed on the cluster of servers (5).

9. The system according to any of the preceding claims, **characterised in that** it includes a second pre-processing module (27) configured to transform vector format of the indicators into matrix format adapted to the application of the learning functions.

10. The system according to any of the preceding claims, **characterised in that** the predetermined learning functions include learning algorithms from among the following algorithms: Kohonen self-organising mapping algorithms, anomaly detection algorithms, trend detection and tracking algorithms, algorithms for analysing operation of equipment or a system specific to aircraft engines, event anticipation or prognosis algorithms.

11. A method for monitoring aircraft engines, **characterised in that** it includes the following steps:
- receiving user codes (9) deployed in a cluster of servers for distributed operation on time data of a fleet (12) of aircraft engines (3) and including specifications of input data to be processed in parallel and output data comprising context and health indicators, said user codes (19) specifying calculation of a set of indicators representative of the state of health of an aircraft engine for deployment on a fleet of aircraft engines,
- extracting said indicators by deploying calculations in parallel in the cluster of servers on time flight data from the fleet of aircraft engines and stored in a database distributed on a cluster of servers,
- using said indicators extracted by the extraction module to build in an unsupervised manner from said indicators a monitoring model (21) representative of the indicators by implementing predetermined learning functions, said monitoring model being adapted to identify trends or to classify aircraft engines to determine which are to be maintained as a priority.

12. A computer program including code instructions for implementing the monitoring method according to claim 11 when executed on the computing environment system according to any of claims 1 to 10.
